(19) Europäisches Patentamt
European Patent Office
Office européen des brevets

(11) **EP 2 172 803 A1**

(12) **EUROPEAN PATENT APPLICATION**

(43) Date of publication:
**07.04.2010 Bulletin 2010/14**

(51) Int Cl.:
***G02F 1/13363*** (2006.01)   *G02F 1/1335* (2006.01)

(21) Application number: **09009096.0**

(22) Date of filing: **13.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **01.10.2008 KR 20080096544**

(71) Applicant: **Samsung Electronics Co., Ltd.**
**Yeongtong-gu**
**Suwon-city, Gyeonggi-do 442-742 (KR)**

(72) Inventors:
• **Park, Won-Sang**
  **Yongin-si-Gyeonggi-do (KR)**

• **Kim, Dong-Hwan**
  **Suwon-si, Gyeonggi-do (KR)**
• **Jee, Ahn-Ho**
  **Hwaseong-si**
  **Gyeonggi-do (KR)**
• **Lee, Chang-Kil**
  **Suwon-si, Gyeonggi-do (KR)**
• **Kang, Chang-Wook**
  **Suwon-si, Gyeonggi-do (KR)**

(74) Representative: **Weitzel, Wolfgang**
  **Dr. Weitzel & Partner**
  **Patentanwälte**
  **Friedenstrasse 10**
  **89522 Heidenheim (DE)**

(54) **Liquid crystal display**

(57)    The present invention relates to a liquid crystal display. The liquid crystal display includes a liquid crystal panel having a first and a second side, a first polarizer arranged on the first side of the liquid crystal panel, and a backlight unit arranged on the first side of the liquid crystal panel, the first polarizer being arranged between the liquid crystal panel and the backlight unit, a second polarizer arranged on the second side of the liquid crystal panel, and a first half-wave plate arranged on the second side of the liquid crystal panel, the second polarizer arranged between the liquid crystal panel and the first half-wave plate. A slow axis of the first half-wave plate meets a transmission axis of the second polarizer at a first angle $\theta_1$ so that the first half-wave plate rotates the polarization axis of polarized light transmitted from the second polarizer.

EP 2 172 803 A1

**Description**

CROSS REFERENCE TO RELATED APPLICATION

This application claims priority from and the benefit of Korean Patent Application No. 10-2008-0096544, filed on October 1, 2008, which is hereby incorporated by reference for all purposes as if fully set forth herein.

BACKGROUND

FIELD
The present disclosure relates to a liquid crystal display.
DISCUSSION OF THE BACKGROUND
Liquid crystal displays (LCDs) are now widely used as one type of flat panel display. An LCD has two display panels on which electrodes are formed, and a liquid crystal layer is disposed between the panels. In the LCD, voltages are applied to the electrodes to align liquid crystal molecules of the liquid crystal layer and control the transmittance of light, thereby displaying an image.
The LCD may be used in an automotive instrument panel. However, when the LCD is used in the instrument panel, it may be problematic because the display contents of the instrument panel may not be seen well by a driver wearing polarized glasses. When a light component reflected from a surface of water, a road, or a snowy road is mixed with a light component from a target object and the light mixture is directly incident upon the eyes of a driver, polarized glasses may filter the light component from the former so as to make it possible for the driver to clearly see the target object. The polarized glasses have a transmission axis that is oriented vertically so that they may block the light component with a horizontal polarization axis. The light components reflected from the surface of the water, the road, or the snowy road typically have a horizontal polarization axis.

SUMMARY

An exemplary embodiment of the present invention provides a liquid crystal display having advantages of making it possible for viewers wearing polarized sunglasses to clearly see displayed images.
An exemplary embodiment of the present invention also provides a half-wave plate to alter the polarization axis of the display light from the liquid crystal display, which may thereby prevent the display light from being blocked by polarized sunglasses.
Additional features of the invention will be set forth in the description which follows, and in part will be apparent from the description, or may be learned by practice of the invention.
An exemplary embodiment of the present invention discloses a liquid crystal display including a liquid crystal panel including a first side and a second side. A first polarizer is arranged on the first side of the liquid crystal panel, and a backlight unit is arranged on the first side of the liquid crystal panel, the first polarizer being arranged between the liquid crystal panel and the backlight unit. A second polarizer is arranged on the second side of the liquid crystal panel, and a first half-wave plate is arranged on the second side of the liquid crystal panel, the second polarizer being arranged between the liquid crystal panel and the first half-wave plate. A slow axis of the first half-wave plate meets a transmission axis of the second polarizer at a first angle $\theta_1$ so that the first half-wave plate rotates the polarization axis of polarized light transmitted from the second polarizer.
It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is an exploded perspective view of a liquid crystal display according to a first exemplary embodiment of the present invention.
FIG. 2 is a layout view of a liquid crystal panel according to a first exemplary embodiment of the present invention.
FIG. 3 is a cross-sectional view of the liquid crystal panel taken along line III-III of FIG. 2.
FIG. 4 is a layout view of transmission axes of two polarizers and a slow axis of a half-wave plate in a liquid crystal display according to a first exemplary embodiment of the present invention.
FIG. 5 is a layout view of transmission axes of two polarizers and a slow axis of a half-wave plate in a liquid crystal display according to a second exemplary embodiment of the present invention.

FIG. 6, FIG. 7, FIG. 8, and FIG. 9 are cross-sectional views of polarizers, half-wave plates, and protection plates in liquid crystal displays according to third, fourth, fifth, and sixth exemplary embodiments of the present invention.

FIG. 10 is a cross-sectional view of a liquid crystal display according to a seventh exemplary embodiment of the present invention.

FIG. 11 is a layout view of transmission axes of two polarizers and slow axes of two half-wave plates in a liquid crystal display according to the seventh exemplary embodiment of the present invention.

## DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

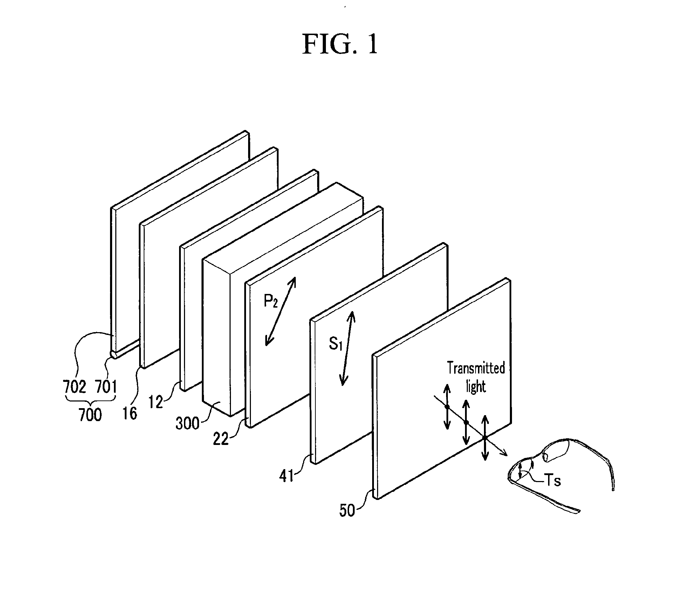

A liquid crystal display according to a first exemplary embodiment of the present invention will be described below with reference to FIG. 1, FIG. 2, FIG. 3, and FIG. 4.

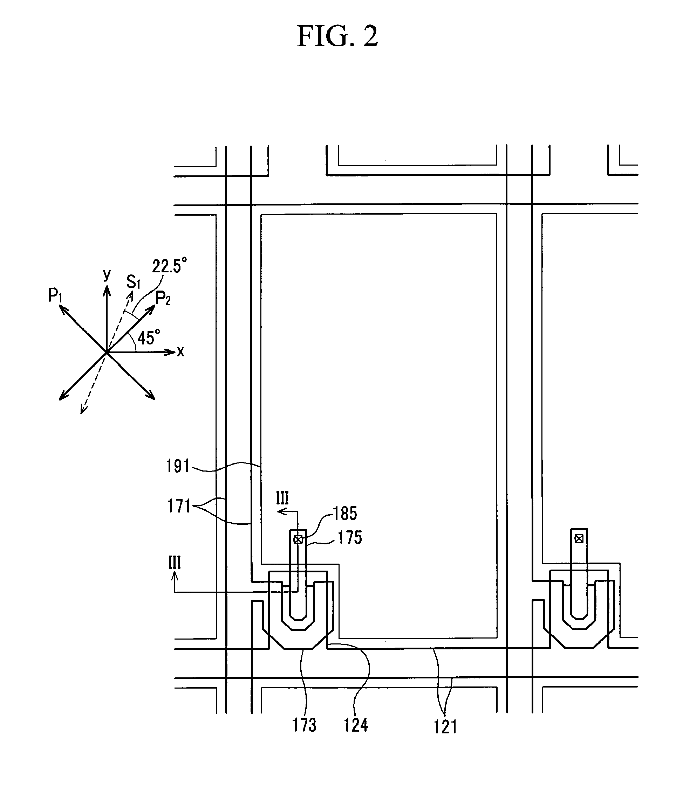

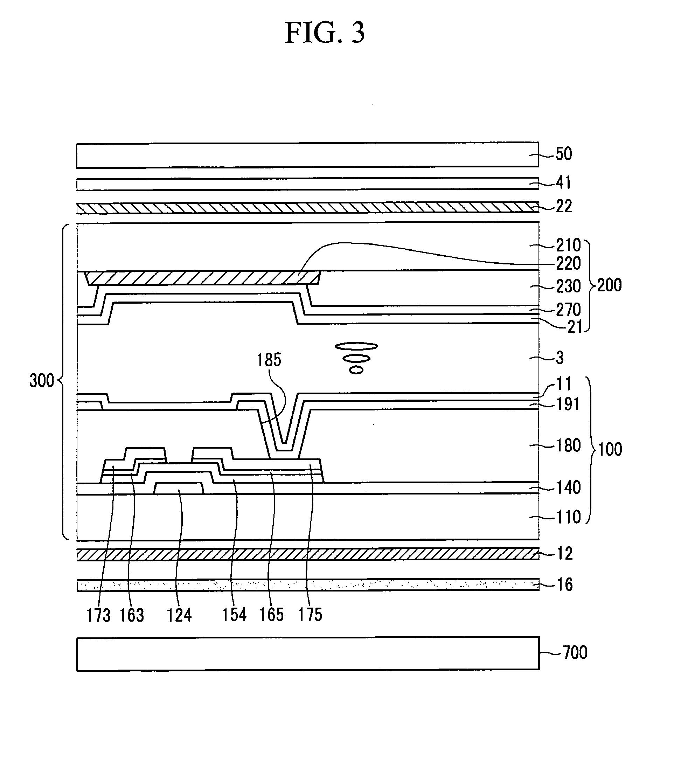

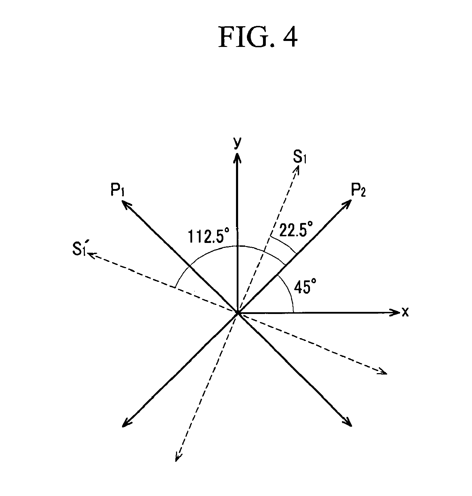

FIG. 1 is an exploded perspective view of a liquid crystal display according to a first exemplary embodiment of the present invention, FIG. 2 is a layout view of a liquid crystal panel according to the first exemplary embodiment of the present invention, and FIG. 3 is a cross-sectional view of the liquid crystal panel taken along line III-III of FIG. 2. FIG. 4 is a layout view of transmission axes of two polarizers and a slow axis of a half-wave plate in the liquid crystal display according to the first exemplary embodiment of the present invention.

Referring to FIG. 1, FIG. 2, and FIG. 3, a liquid crystal display according to the present exemplary embodiment includes a liquid crystal panel 300, first and second polarizers 12 and 22 respectively disposed on both sides of the liquid crystal panel 300, a diffusion film 16 disposed on an outer surface of the first polarizer 12, a backlight unit 700 disposed on an outer surface of the diffusion film 16, a half-wave plate 41 disposed on an outer surface of the second polarizer 22, and a protection plate 50 disposed on an outer surface of the second polarizer 22. The half-wave plate 41 may be manufactured by pressing or cascade-engineering the material Arton®, S-Cina™, Zeonor®, or poly carbonate (PC). The half-wave plate 41 induces a phase difference of about 235nm to 315nm with respect to green light with a wavelength of 550nm.

The backlight unit 700 includes a light source 701 including a cold cathode tube and a light emitting diode (LED), and a light guide 702 for converting the linear or dot rays from the light source 701 into surface rays.

A liquid crystal panel 300 will be described in detail with reference to FIG. 2 and FIG. 3.

The liquid crystal panel 300 includes a thin film transistor array panel 100, a common electrode panel 200, and a liquid crystal layer 3 disposed between the two display panels 100 and 200.

The thin film transistor array panel 100 will be described below in detail.

A plurality of gate lines 121, each gate line including a plurality of gate electrodes 124, are formed on a substrate 110 made of an insulating material such as glass or plastic. A gate insulating layer 140, a plurality of semiconductors 154, a plurality of ohmic contacts 163 and 165, a plurality of data lines 171, and a plurality of drain electrodes 175 are sequentially overlaid thereon.

The gate lines 121 carry gate signals, and extend in a horizontal direction. The data lines 171 carry data signals, and extend in a vertical direction to cross the gate lines 121. The data lines 171 each have a plurality of source electrodes 173 extended toward the gate electrodes 124. The drain electrodes 175 are separated from the data lines 171, and face the source electrodes 173 while being centered on the gate electrodes 124.

Each semiconductor 154 is arranged on the gate electrode 124 while being overlapped with the ohmic contacts 163 and 165. The ohmic contacts 163 and 165 are disposed between the semiconductor 154 and the data line 171 and drain electrode 175, to reduce contact resistance therebetween.

The gate electrode 124, the source electrode 173, and the drain electrode 175 form a thin film transistor (TFT) together with the semiconductor 154, and a channel of the TFT is formed in the semiconductor 154 between the source and drain electrodes 173 and 175.

A passivation layer 180 is formed on the data lines 171 and the drain electrodes 175, and the passivation layer 180 may be made of silicon nitride or silicon oxide.

Contact holes 185 are formed in the passivation layer 180 such that they expose the drain electrodes 175.

Pixel electrodes 191 are formed on the passivation layer 180, and are connected to the drain electrodes 175 through the contact holes 185.

A lower alignment layer 11 is formed on the pixel electrodes 191.

The common electrode panel 200 faces the thin film transistor array panel 100, and includes a substrate 210 sequentially overlaid with a light blocking member 220, color filters 230, a common electrode 270, and an upper alignment layer 21. Alternatively, the light blocking member 220 and the color filter 230 may be formed on the thin film transistor array panel 100.

A liquid crystal layer 3 is disposed between the common electrode panel 200 and the thin film transistor array panel 100. The liquid crystal layer 3 contains a twisted nematic (TN) mode liquid crystal, and is aligned so that the liquid crystal molecules thereof are twisted under the alignment force of the upper and lower alignment layers 21 and 11.

The TN mode LCD may be operated even at 85°C, and may secure a response time of 100ms or less at -20°C, and hence, may be well adapted for use as an automotive instrument panel, which should be operable under severe and extreme conditions.

As shown in FIG. 2 and FIG. 4, when viewed from the front side, the horizontal axis of the liquid crystal display (which may be parallel to the gate lines 121 or the data lines 171) is referred to as an x axis and the vertical axis thereof is referred to as a y axis, and the transmission axis P1 of the first polarizer 12 may be angled to the y axis at 45 degrees (rotated from the y axis by 45 degrees in a counterclockwise direction) and the transmission axis P2 of the second polarizer 22 may be angled to the y axis at -45 degrees (rotated from the y axis by 45 degrees in a clockwise direction). The presence of the minus sign "-" means that the target object is rotated from the reference line in a clockwise direction, while the absence of the minus sign "-" means that the target object is rotated from the reference line in a counterclockwise direction.

The lower alignment layer 11 is rubbed in a direction parallel to the x axis or the y axis, and the upper alignment layer 21 is rubbed in a direction not parallel to the rubbing direction of the lower alignment layer 11. The rubbing direction of the upper alignment layer 21 may be perpendicular to that of the lower alignment layer 11.

The half-wave plate 41 rotates the polarization axis of the polarized light, and may be disposed such that the slow axis S1 or S1' thereof is angled to the transmission axis P2 of the second polarizer at 22.5 degrees or 112.5 degrees.

When the half-wave plate 41 is disposed as described above, as shown in FIG. 1 and FIG. 4, the polarization axis of light passing through the second polarizer 22 is rotated by about 45 degrees or 225 degrees in a counterclockwise direction while passing through the half-wave plate 41 so that the polarization axis is parallel to the y axis. Thus, a light has only the polarized components proceeding parallel to the transmission axis Ts of polarized sunglass lenses, the light passes through the polarized sunglass lenses completely and reaches the eyes of the viewer. Accordingly, even when the viewer wears polarized sunglasses and views the LCD, the viewer may see displayed images in a clear and distinct manner. The luminance difference of the LCD to a viewer wearing polarized sunglasses and a viewer not wearing polarized sunglasses may be at most 5%. The luminance difference of about 5% may occur because the light components not parallel to the transmission axis Ts of polarized sunglasses exist as the rotation degree of the polarization axis due to the half-wave plate 41 being differentiated depending upon the wavelengths of light.

The angle of the slow axis S1 or S1' of the half-wave plate 41 with respect to the transmission axis P2 of the second polarizer may be varied within the range of $\pm 10$ degrees, from 22.5 degrees or 112.5 degrees. Within that range, the luminance loss due to polarized sunglasses may be small enough to recognize the display images of the LCD.

Meanwhile, the angle $\theta$ of the transmission axis P2 of the second polarizer 22 with respect to the y axis may be other than -45 degrees. Considering such a case, the range of the angle $\theta_1$ of the slow axis S1 or S1' of the half-wave plate 41 to the transmission axis P2 of the second polarizer 22 may be generally expressed by Formula 1.

$$[\text{Formula 1}]$$

$$-\theta/2-10° \leq \theta_1 \leq -\theta/2+10° \text{ or } -\theta/2+80° \leq \theta_1 \leq -\theta/2+100°$$

Formula 1 is effective provided that $\theta$ has a negative value.

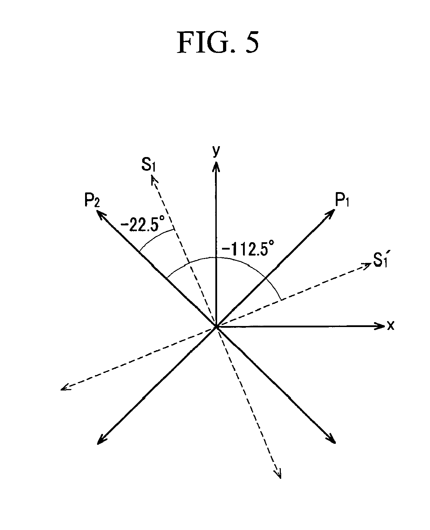

FIG. 5 is a layout view of transmission axes of two polarizers and a slow axis of a half-wave plate in a LCD according to a second exemplary embodiment of the present invention.

The LCD according to the second exemplary embodiment is the same as the LCD according to the first exemplary embodiment of the present invention, except that the angle of the transmission axes of the two polarizers and the slow axis of the half-wave plate with respect to the y axis is different.

When the LCD is viewed from the front side, the transmission axis P1 of the first polarizer 12 is angled to the y axis at -45 degrees, and the transmission axis P2 of the second polarizer 22 is angled to the y axis at 45 degrees.

The half-wave plate 41 may be arranged such that the slow axis S1 or S1' thereof is angled to the transmission axis P2 of the second polarizer at -22.5 or -112.5 degrees.

When the half-wave plate 41 is arranged as described above, the polarization axis of the light passing through the second polarizer 22 is rotated by about -45 or -225 degrees in a clockwise direction while the light passes through the half-wave plate 41, so that the polarization axis is parallel to the y axis. Thus, the light has only polarized components parallel to the transmission axis Ts of polarized sunglass lenses, and light passes through the polarized sunglass lenses completely, and reaches the eyes of the viewer. Accordingly, even when the viewer wears polarized sunglasses while viewing the LCD, the viewer may see displayed images in a clear and distinct manner. The luminance difference of the LCD to a viewer wearing polarized sunglasses and a viewer not wearing polarized sunglasses may be at most 5%. The luminance difference of about 5% occurs because the light components not parallel to the transmission axis Ts of the polarized sunglasses exist as the rotation degree of the polarization axis due to the half-wave plate 41 being differentiated depending upon the wavelengths of light.

The angle of the slow axis S1 or S1' of the half-wave plate 41 with respect to the transmission axis P2 of the second polarizer may be varied within the range of ± 10 degrees, from -22.5 or -112.5 degrees. Within that range, the luminance loss due to polarized sunglasses may be small enough to recognize the display images of the LCD.

Meanwhile, the angle $\theta$ of the transmission axis P2 of the second polarizer 22 with respect to the y axis may be other than 45 degrees. Considering such a case, the range of the angle $\theta_1$ of the slow axis S1 or S1' of the half-wave plate 41 to the transmission axis P2 of the second polarizer may be expressed by Formula 2.

## [Formula 2]

$$-\theta/2-10° \leq \theta_1 \leq -\theta/2+10° \text{ or } -\theta/2-100° \leq \theta_1 \leq -\theta/2-80°$$

Formula 2 is effective provided that $\theta$ has a positive value.

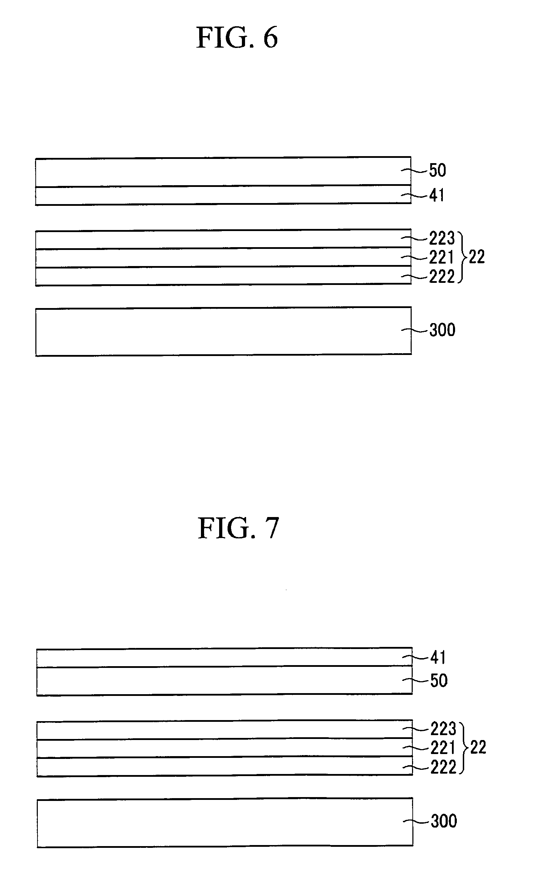

FIG. 6, FIG. 7, FIG. 8, and FIG. 9 are cross-sectional views of polarizers, half-wave plates, and protection plates in LCDs according to third, fourth, fifth, and sixth exemplary embodiments of the present invention.

With a LCD according to a third exemplary embodiment of the present invention, as shown in FIG. 6, a half-wave plate 41 is disposed between a protection plate 50 and a second polarizer 22 while being attached to the protection plate 50. The second polarizer 22 includes a polarizing medium film 221 which may be made of a polyvinyl alcohol (PVA) film, and support films 222 and 223 may be respectively attached to both sides of the polarizing medium film 221 to protect it. The support films 222 and 223 may be made of one of tri-acetyl-cellulose (TAC), wide viewing tri-acetyl-cellulose (WVTAC), and a phase difference film. The support films 222 and 223 are commonly made of TAC. However, under severe and extreme conditions, they may be made of a phase difference film bearing an excellent moisture-proofing property, for example a cyclo olefin polymer (COP) film or WVTAC.

In the LCD according to the third exemplary embodiment of the present invention, the range of the angle $\theta_1$ of the slow axis S1 or S1' of the half-wave plate 41 to the transmission axis P2 of the second polarizer 22 may be expressed by Formulas 1 and 2.

A LCD according to a fourth exemplary embodiment of the present invention differs from that according to the third exemplary embodiment of the present invention only in that, as shown in FIG. 7, the half-wave plate 41 is attached to the outer surface of the protection plate 50. In the LCD according to the fourth exemplary embodiment of the present invention, the range of the angle $\theta_1$ of the slow axis S1 or S1' of the half-wave plate 41 to the transmission axis P2 of the second polarizer 22 may be expressed by Formulas 1 and 2.

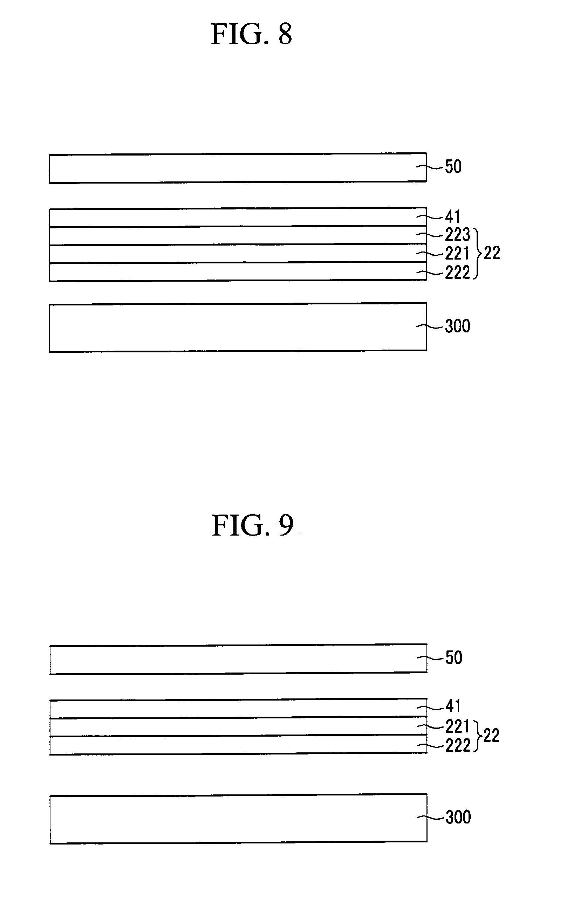

An LCD according to a fifth exemplary embodiment of the present invention differs from that according to the third exemplary embodiment of the present invention only in that, as shown in FIG. 8, a half-wave plate 41 is attached to the outer surface of a second polarizer 22. In the LCD according to the fifth exemplary embodiment of the present invention, the range of the angle $\theta_1$ of the slow axis S1 or S1' of the half-wave plate 41 to the transmission axis P2 of the second polarizer 22 may be expressed by Formulas 1 and 2.

An LCD according to a sixth exemplary embodiment of the present invention differs from that according to the fifth exemplary embodiment of the present invention only in that, as shown in FIG. 9, a half-wave plate 41 is attached to the outer surface of a polarizing medium film 221 of the second polarizer 22 instead of the outer side support of the second polarizer 22. In the liquid crystal display according to the sixth exemplary embodiment of the present invention, the range of the angle $\theta_1$ of the slow axis S1 or S1' of the half-wave plate 41 to the transmission axis P2 of the second polarizer 22 may be expressed by Formulas 1 and 2.

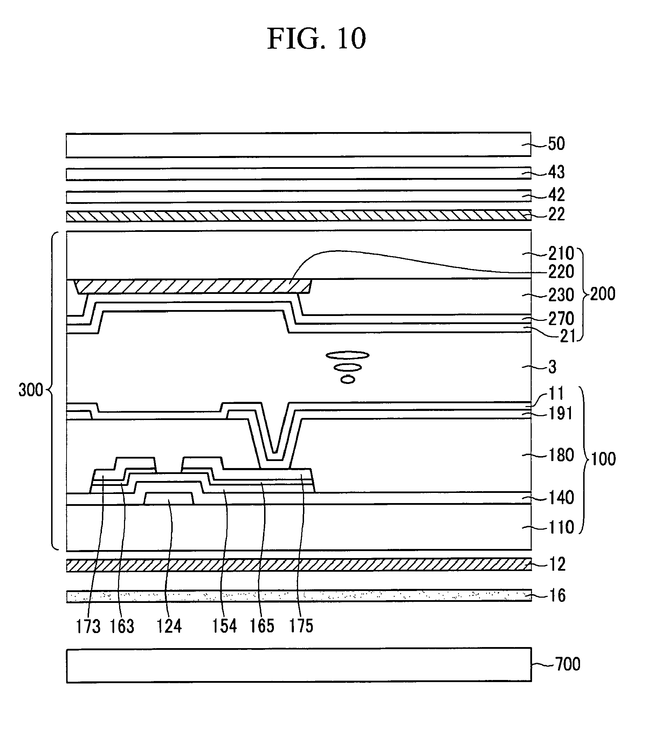

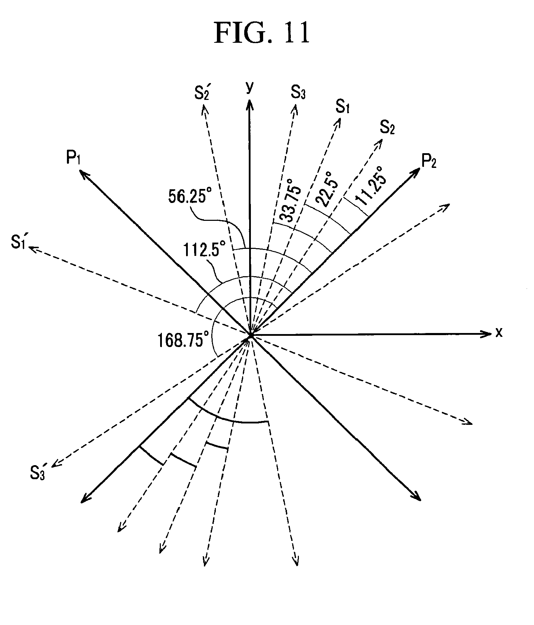

FIG. 10 is a cross-sectional view of a liquid crystal display according to a seventh exemplary embodiment of the present invention, and FIG. 11 is a layout view of transmission axes of two polarizers and slow axes of two half-wave plates in the LCD according to the seventh exemplary embodiment of the present invention.

A liquid crystal display according to a seventh exemplary embodiment of the present invention differs from that according to the first exemplary embodiment of the present invention only in that two sheets of half-wave plates 42 and 43 are used, and the angle of the slow axes S2 and S3 or S2' and S3' of the half-wave plates 42 and 43 with respect to the transmission axis P2 of the second polarizer 22 is differentiated.

The first and second half-wave plates 42 and 43 are disposed between the second polarizer 22 and the protection plate 50. The slow axis S2 or S2' of the first wave plate 42 and the slow axis S3 or S3' of the second half-wave plate 43 are angled to the transmission axis P2 of the second polarizer at 11.25 and 33.75 degrees, or 56.25 and 168.75 degrees, respectively.

When the first and second half-wave plates 42 and 43 are disposed as described above, the polarization axis of the light passing the second polarizer 22 is rotated by about 22.5 or 112.5 degrees in a counterclockwise direction while passing through the first half-wave plate 42. The polarization axis of the light is again rotated by about 22.5 or 112.5 degrees in a counterclockwise direction while passing through the second half-wave plate 43 so that it is parallel to the y axis. Thus, light has only polarized components parallel to the transmission axis Ts of polarized sunglass lenses, it passes through polarized sunglass lenses completely, and reaches the eyes of the viewer. Accordingly, even when the viewer wears polarized sunglasses while viewing the LCD, the viewer may see displayed images in a clear and distinct manner. In this way, with the usage of two sheets of half-wave plates 42 and 43, the deviation in the rotation degree of the polarization axis as a function of the wavelengths of light may be reduced. Accordingly, the luminance difference in the LCD to a viewer wearing polarized sunglasses and a viewer not wearing polarized sunglasses may be reduced to about 1%.

The angle of the slow axis S2 and S3 or S2' and S3' of the half-wave plates 42 and 43 with respect to the transmission axis P2 of the second polarizer may be varied within the range of $\pm$ 5 degrees from 11.25 and 33.75 degrees or 56.25 and 168.75 degrees. Within that range, the luminance loss due to polarized sunglasses is small enough to recognize the display images of the LCD.

Meanwhile, the angle $\theta$ of the transmission axis P2 of the second polarizer 22 with respect to the y axis may be other than -45 degrees. Considering even such a case, the range of the angle $\theta_1$ of the slow axis S2 or S2' of the half-wave plate 42 to the transmission axis P2 of the second polarizer 22 and the range of the angle $\theta_2$ of the slow axis S3 or S3' of the half-wave plate 43 to the transmission axis P2 of the second polarizer 22 can be generally expressed by Formula 3.

[Formula 3]

$$-\theta/4 - 5° \le \theta_1 \le -\theta/4 + 5°, \quad -\theta(3/4) - 5° \le \theta_2 \le -\theta(3/4) + 5° \text{ or}$$

$$-\theta/4 + 40° \le \theta_1 \le -\theta/2 + 50°, \quad -\theta(3/4) + 130° \le \theta_2 \le -\theta(3/4) + 140°$$

Formula 3 is effective provided that $\theta$ has a negative value.

Compared to where the angle $\theta$ of the transmission axis P2 of the second polarizer 22 to the y axis has a negative value, where $\theta$ has a positive value, the angle $\theta_1$ of the slow axis S2 or S2' of the first half-wave plate 42 to the transmission axis P2 of the second polarizer 22 and the angle $\theta_2$ of the slow axis S3 or S3' of the second half-wave plate 43 to the transmission axis P2 of the second polarizer 22 are symmetrical to the y axis. Accordingly, when $\theta$ has a positive value, $\theta_1$ and $\theta_2$ can be generally expressed by Formula 4.

[Formula 4]

$$-\theta/4 - 5° \le \theta_1 \le -\theta/4 + 5°, \quad -\theta(3/4) - 5° \le \theta_2 \le -\theta(3/4) + 5° \text{ or}$$

$$-\theta/2 - 50° \le \theta_1 \le -\theta/4 - 40°, \quad -\theta(3/4) - 140° \le \theta_2 \le -\theta(3/4) - 130°$$

Formula 4 is effective provided that $\theta$ has a positive value.

In the LCD according to the seventh exemplary embodiment of the present invention, the second polarizer 22 may include a polarizing medium film 221 made of a polyvinyl alcohol (PVA) film, and two sheets of support films 222 and 223 may be attached to both sides of the polarizing medium film 221 to protect it. The support films 222 and 223 may be made of one of tri-acetyl-cellulose (TAC), wide viewing tri-acetyl-cellulose (WVTAC), and a phase difference film.

Furthermore, the second half-wave plate 43 may be attached to the outer surface of the protection plate 50 or the inner surface thereof, and the first half-wave plate 42 may be attached to the outer surface of the second polarizer 22 to replace the support film.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

**Claims**

1. A liquid crystal display, comprising:

   a liquid crystal panel comprising a first side and a second side;
   a first polarizer arranged on the first side of the liquid crystal panel;
   a backlight unit arranged on the first side of the liquid crystal panel, the first polarizer being arranged between the backlight unit and the liquid crystal panel;
   a second polarizer arranged on the second side of the liquid crystal panel; and
   a first half-wave plate arranged on the second side of the liquid crystal panel, the second polarizer being arranged between the first half-wave plate and the liquid crystal panel,
   wherein a slow axis of the first half-wave plate meets a transmission axis of the second polarizer at a first angle $\theta_1$ so that the first half-wave plate rotates the polarization axis of polarized light transmitted from the second polarizer.

2. The liquid crystal display of claim 1, wherein when viewed from a front side thereof, the horizontal axis of the liquid crystal panel is referred to as an x axis and the vertical axis is referred to as a y axis, and when the angle of the transmission axis of the second polarizer to the y axis is referred to as a transmission axis angle $\theta$, the first angle $\theta_1$ satisfies the formula $-\theta/2-10°\leq\theta_1\leq-\theta/2+10°$ or $-\theta/2+80°\leq\theta_1\leq-\theta/2+100°$ when the transmission axis angle $\theta$ has a negative value and is rotated from the y axis in a clockwise direction, and the first angle $\theta_1$ satisfies the formula $-\theta/2-10°\leq\theta_1\leq-\theta/2+10°$ or $-\theta/2-100°\leq\theta_1\leq-\theta/2-80°$ when the transmission axis angle $\theta$ has a positive value and is rotated from the y axis in a counterclockwise direction.

3. The liquid crystal display of claim 2, wherein the transmission axis angle $\theta$ is -45 degrees and coincides with the transmission axis of the second polarizer when rotated from the y axis by 45 degrees in a clockwise direction, when the first angle $\theta_1$ is 22.5 or 112.5 degrees.

4. The liquid crystal display of claim 2, wherein the transmission axis angle $\theta$ is 45 degrees and coincides with the transmission axis of the second polarizer when rotated from the y axis by 45 degrees in a counterclockwise direction, when the first angle $\theta_1$ is -22.5 or -112.5 degrees.

5. The liquid crystal display of claim 2, further comprising a protection plate arranged on the second side of the liquid crystal panel, the first half-wave plate being arranged between the protection plate and the liquid crystal panel.

6. The liquid crystal display of claim 5, wherein the second polarizer comprises a polarizing medium film, a first support film, and a second support film,
   wherein the first support film is attached to a first side of the polarizing medium film and the second support film is attached to a second side of the polarizing medium film, the second side of the polarizing medium film being opposite the first side of the polarizing medium film.

7. The liquid crystal display of claim 5, wherein the second polarizer comprises a polarizing medium film comprising two side surfaces and a first support film attached to one side surface of the polarizing medium film, and
   wherein the first half-wave plate is attached to the other side surface of the polarizing medium film.

8. The liquid crystal display of claim 2 further comprising a protection plate arranged on the second side of the liquid crystal panel, the protection plate being disposed between the first half-wave plate and the second polarizer.

9.  The liquid crystal display of claim 1 further comprising a second half-wave plate arranged on the second side of the liquid crystal panel, the first half-wave plate being arranged between the liquid crystal panel and the second half-wave plate, wherein a slow axis of the second half-wave plate meets the transmission axis of the second polarizer at a second angle $\theta_2$ so that the second half-wave plate rotates the polarization axis of polarized light transmitted from the first half-wave plate.

10. The liquid crystal display of claim 9, wherein when viewed from a front side of the liquid crystal display, the horizontal axis is referred to as an x axis and the vertical axis is referred to as a y axis, and when the angle of the transmission axis of the second polarizer to the y axis is referred to as a transmission axis angle $\theta$, the first angle $\theta_1$ and the second angle $\theta_2$ satisfy the formula $-\theta/4-5°\leq\theta_1\leq-\theta/4+5°$, $-\theta(3/4)-5°\leq\theta_2\leq-\theta(3/4)+5°$, or $-\theta/4+40°\leq\theta_1\leq-\theta/2+50°$, $-\theta(3/4)+130°\leq\theta_2\leq-\theta(3/4)+140°$ when the transmission axis angle $\theta$ has a negative value and is rotated from the y axis in a clockwise direction, and the first angle $\theta_1$ and the second angle $\theta_2$ satisfy the formula $-\theta/4-5°\leq\theta_1\leq-\theta/4+5°$, $-\theta(3/4)-5°\leq\theta_2\leq-\theta(3/4)+5°$, or $-\theta/2-50°\leq\theta_1\leq-\theta/4-40°$, $-\theta(3/4)-140°\leq\theta_2\leq-\theta(3/4)-130°$ when the transmission axis angle $\theta$ has a positive value and is rotated from the y axis in a counterclockwise direction.

11. The liquid crystal display of claim 10, wherein the transmission axis angle $\theta$ is -45 degrees and coincides with the transmission axis of the second polarizer when rotated from the y axis by 45 degrees in a clockwise direction, when the first angle $\theta_1$ and the second angle $\theta_2$ are 11.25 and 33.75 degrees, or 56.25 and 168.75 degrees, respectively.

12. The liquid crystal display of claim 10, wherein the transmission axis angle 9 is 45 degrees and coincides with the transmission axis of the second polarizer when rotated from the y axis by 45 degrees in a counterclockwise direction, when the first angle $\theta_1$ the second angle $\theta_2$ are -11.25 and -33.75 degrees, or -56.25 and -168.75 degrees, respectively.

13. The liquid crystal display of claim 10, further comprising a protection plate arranged on the second side of the liquid crystal panel, the second half-wave plate being arranged between the liquid crystal panel and the protection plate.

14. The liquid crystal display of claim 13, wherein the second polarizer comprises a polarizing medium film, a first support film, and a second support film and
wherein the first support film is attached a first side of the polarizing medium film and the second support film is attached to a second side of the polarizing medium film, the second side of the polarizing medium film being opposite the first side of the polarizing medium film.

15. The liquid crystal display of claim 13, wherein the second polarizer comprises a polarizing medium film comprising two side surfaces and a first support film attached to one side surface of the polarizing medium film, and
wherein the first half-wave plate is attached to the other side surface of the polarizing medium film.

# FIG. 1

# FIG. 2

# FIG. 3

# FIG. 4

# FIG. 5

# FIG. 6

# FIG. 7

# FIG. 8

```
                                              ┌─50

                                              ┌─41
                                              ┌─223 ┐
                                              ┌─221 ├22
                                              ┌─222 ┘

                                              ┌─300
```

# FIG. 9

```
                                              ┌─50

                                              ┌─41
                                              ┌─221 ┐
                                              ┌─222 ┘22

                                              ┌─300
```

# FIG. 10

# FIG. 11

Europäisches
Patentamt

European
Patent Office

Office européen
des brevets

**EUROPEAN SEARCH REPORT**

**Application Number**

EP 09 00 9096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 131738 A (PORA TECHNO KK; NIPPON KAYAKU KK) 9 May 2002 (2002-05-09) | 1-4,9-12 | INV. G02F1/13363 |
| Y | * paragraph [0004] - paragraph [0006]; claim 6; figures 1,2 * | 5-8, 13-15 | ADD. G02F1/1335 |
| X | JP 2008 083115 A (EPSON IMAGING DEVICES CORP) 10 April 2008 (2008-04-10) | 1-4,9-12 | |
| Y | * paragraphs [0011] - [0034]; figures 1,2 * | 5-8, 13-15 | |
| Y | US 2006/262255 A1 (WANG RAN-HONG R [US] ET AL) 23 November 2006 (2006-11-23) * paragraphs [0048] - [0049]; figure 2 * * paragraph [0081]; figure 12 * * paragraph [0089]; figure 15 * * paragraph [0106]; figure 16 * | 5-8, 13-15 | |
| Y | WO 03/005112 A1 (3M INNOVATIVE PROPERTIES CO [US]) 16 January 2003 (2003-01-16) * page 2, line 23 - page 4, line 16 * | 6-7, 14-15 | |
| A | US 2007/216836 A1 (LIPPEY BARRET [US]) 20 September 2007 (2007-09-20) * the whole document * | 1 | TECHNICAL FIELDS SEARCHED (IPC) G02F |

The present search report has been drawn up for all claims

| Place of search | Date of completion of the search | Examiner |
|---|---|---|
| Munich | 6 November 2009 | Ammerlahn, Dirk |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 9096

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2009

| Patent document cited in search report | | Publication date | Patent family member(s) | | Publication date |
|---|---|---|---|---|---|
| JP 2002131738 | A | 09-05-2002 | NONE | | |
| JP 2008083115 | A | 10-04-2008 | NONE | | |
| US 2006262255 | A1 | 23-11-2006 | US 2006262258 | A1 | 23-11-2006 |
| WO 03005112 | A1 | 16-01-2003 | CA 2449980 | A1 | 16-01-2003 |
| | | | CN 1692302 | A | 02-11-2005 |
| | | | DE 20221905 | U1 | 20-05-2009 |
| | | | EP 1405129 | A1 | 07-04-2004 |
| | | | JP 2005512112 | T | 28-04-2005 |
| | | | US 2003001987 | A1 | 02-01-2003 |
| US 2007216836 | A1 | 20-09-2007 | CN 101405631 | A | 08-04-2009 |

EPO FORM P0459

For more details about this annex : see Official Journal of the European Patent Office, No. 12/82

**EP 2 172 803 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080096544